# EUROPEAN PATENT SPECIFICATION

(11) **EP 3 378 542 B1**
(45) Date of publication and mention of the grant of the patent: **07.07.2021**
(21) Application number: 17188600.5
(22) Date of filing: 30.08.2017
(51) Int. Cl.: A63F 13/65, A63F 13/211, A63F 13/213, A63F 13/285, A63F 13/428, A63F 13/573, A63F 13/812, G07F 17/38, A63D 15/20

(54) **SYSTEM AND METHOD OF MODELING THE BEHAVIOR OF GAME ELEMENTS DURING A REMOTE GAME**
SYSTEM UND VERFAHREN ZUR MODELLIERUNG DES VERHALTENS VON SPIELELEMENTEN WÄHREND EINES ENTFERNTEN SPIELS
SYSTÈME ET PROCÉDÉ DE MODÉLISATION DU COMPORTEMENT D'ÉLÉMENTS DE JEU PENDANT UN JEU À DISTANCE

(30) Priority: 24.03.2017 RU 2017109813; 04.08.2017 US 201715669259
(43) Date of publication of application: 26.09.2018
(73) Proprietor: AO Kaspersky Lab, Moscow 125212 (RU)
(72) Inventor: KASPERSKY, Eugene V., 125212 MOSCOW (RU); CHIKOV, Alexey M., 125212 MOSCOW (RU)
(74) Representative: Chimini, Francesco

(56) References cited:
- WO-A1-2010/000068
- WO-A2-2009/126982
- US-A1- 2011 021 256
- US-A1- 2011 053 688
- US-A1- 2015 157 944
- US-A1- 2016 144 268
- Anonymous: "Game physics - Wikipedia", , 30 November 2016 (2016-11-30), XP055659097, Retrieved from the Internet: URL:https://en.wikipedia.org/w/index.php?t itle=Game_physics&oldid=752279493 [retrieved on 2020-01-17]

## Description

### FIELD OF TECHNOLOGY

The present disclosure relates to the field of modeling physical processes, more specifically, systems and methods of modeling the behavior of game elements during a remote game.

### BACKGROUND

Due to the increasing computing power of modern computers, it has become possible to implement a virtual reality, within which diverse physical processes are modeled. This has found an application in the entertainment industry - a large number of computer game simulators have appeared, in which the user can control simulated objects as if it were occurring in real life (with a given level of precision, of course). The use of virtual reality has made it possible for users in different locations to play together, interacting with the very same objects.

The main problem with computer models of physical processes (such as the modeling of the problems of interaction of several material bodies, where the problems may involve certain computer games such as billiards, table soccer, and so forth) is the great complexity of the computations of the interaction of physical objects with each other (ball, players, elements of the game table, and so on). The complexity of the calculations performed leads to low accuracy or speed of such calculations, which negatively affects the level of comfort and the feeling of reality of the game, or results in great expense for the organization of the computer system which is able to perform the necessary calculations with the necessary accuracy.

At present, there are many physics engines (computer programs which perform a computer modeling and simulation of the physical laws of the real world in a virtual world), both commercial (such as Havok™) and free of charge (such as PhysX™), which provide their own API (Application Programming Interface) for modeling diverse physical processes and physical systems. The main drawback of the existing physics engines is the low precision of the calculations and the limited number of interacting objects or types of interacting objects (for example, it is very hard to realize a modeling of the interaction of rubber objects).

Besides the modeling of physical processes, a proper visualization of the processes being modeled is also necessary for a comfortable experience of the virtual reality by the user. Many different techniques are used for this, employing a large array of computing devices (such as video cards). One method of visualizing a particular physical model is the method of ray tracing, in which the behavior of the rays of light passing through the model of the physical processes is simulated. Even so, this method of visualization is exceedingly resource-hungry and cannot be incorporated in real time on existing computing devices (even supercomputers). In order to find a compromise between the usable computing resources and the accuracy of the visualization, simplifications are made, such as a backward ray tracing, which work noticeably faster, but produce less accurate results.

Therefore, in order to solve the above-described problems, various methods of realization of physical processes are employed, during which the users can remotely perform various actions and observe the result of the performance of those actions. For example, during the execution of a remote game between users (say, billiards) the users can control the cue sticks remotely, striking the billiard balls which are also remotely present on the billiard table and observing the results of their game on monitors.

Although the above-described methods work well with problems of simulating simple physical processes, as well as the visualization of the processes being simulated, they cannot handle the modeling and visualization of complex processes (identical to physical ones) or work with a large number of simulated processes. As such, there is a need to improve the simulation of the interaction of physical objects.

US 2016/144268 A1 discloses cue sports tables with associated automated sensor and positioning assemblies, that permit competitors to play each other on separate tables; US 2011/021256 A1 discloses automated enhancements for billiards, wherein position data are generated to describe real-time positions of each of one or more billiard balls moving on a playing surface of a billiard table; US 2011/053688 A1 discloses s system for visually enhancing a game structure having a game surface and objects that move on the game surface. However, the above mentioned problems still remain unresolved.

### SUMMARY

The invention is defined in the appended claims. Examples of the present disclosure are designed to visualize the modeling of physical processes. The technical result of the present disclosure is to increase the accuracy of the modeling of the behavior of game elements. Yet another technical result of the present disclosure is to improve the accuracy of the visualization by the user of the behavior of the game elements. Yet another technical result of the present disclosure is to increase the accuracy of the feedback of the game manipulator simulating the force action on the game elements by the forming of a physical playing field and game elements, applying force actions to the created game elements, and changing the state of the game manipulator on the basis of the behavior parameters of the game elements subjected to the force action. Yet another technical result is to increase the accuracy of the transmitted position of the game elements at the moment of transmission of a move during a remote game between at least two players, which is accomplished by simulating the behavior of the game elements.

These results are achieved by the use of methods for modeling the behavior of game elements during a remote game between at least two users, containing steps which are realized with the aid of a module from the system of modeling the behavior of the game elements, and in which: with the aid of positioning module, the parameters are determined for at least two game elements representing material objects whose mutual disposition and physical properties are determined by the parameters of the game elements and which characterize the states of the aforementioned game elements; with the aid of the game manipulator, a physical action is tracked which is performed by a user in order to exert a force action on at least one game element, and upon detection of the physical action the physical parameters characterizing that physical action are calculated; with the aid of a module for performing force actions, on the basis of the determined parameters of at least one game element and the calculated physical parameters, the game element is determined which needs to be subjected to the force action, and the parameters of that force action on the determined game element are calculated; with the aid of the module for performing force actions, a force action is performed on the determined game element in accordance with the calculated parameters of the force action; with the aid of a control module, the behavior of the game elements is tracked and the parameters of that behavior are determined, wherein the parameters of the behavior characterize the change in state of the game elements; with the aid of visualization module, a model of the behavior of the game elements is formed on the basis of the determined parameters of the game elements and the determined behavior parameters of the game elements.

In another example, each user employs his own game manipulator in order to perform the force action on at least one game element.

In yet another example, the game element is a material object, whose spatial coordinates and physical properties are determined by the physical parameters of the game element.

In another example, the game element may be a playing field - a physical object on which other game elements are situated.

In yet another example, the playing field is a billiard table.

In another example, the game element is a billiard ball.

In yet another example, the game elements are remote from the user so that the user in performing the physical action is not able to directly apply a force action to the game elements.

In another example, the physical parameters of the physical action are at least: the vector and magnitude of the velocity of application of the physical action; the vector and magnitude of the momentum of application of the physical action; the vector and magnitude of the angular momentum of application of the physical action; the energy transmitted as a result of the application of the physical action.

In yet another example, the force action on the game element is applied by at least one of the following methods: mechanically, by striking the game element with the module of applying the force actions; by transfer of an electromagnetic pulse to the game element from the module for applying the force actions.

In another example, the parameters of the force action include: the time of the force action; the position of the force action on the game element; the force exerted on the game element in the determined position and at the determined time.

In yet another example, the force exerted on the game element is characterized by at least: the physical force acting on the game element; the momentum transmitted to the game element; the energy transmitted to the game element.

In another example, the model of the behavior of the game elements is at least: a set of virtual 3D models of the game elements, where each said 3D model is coordinated with a time during which said 3D model was the current one; a video stream recorded from the playing field created.

In yet another example, the control module includes at least video cameras, motion sensors, range finders and thermal imagers therein for tracking the behavior of the game elements, as well as software for determining the parameters of the mentioned behavior.

In another example, the behavior parameters of the game elements characterize the change in state of the game manipulator.

In yet another example, the control module implements a feedback from the game manipulator, consisting in a change in state of the game manipulator on the basis of the behavior parameters of the game elements to which the force action has been applied;

In another example, the visualization module after creating the behavior model of the game elements performs a visualization of the game elements.

The above simplified summary of example embodiments serves to provide a basic understanding of the present disclosure. This summary is not an extensive overview of all contemplated embodiments, and is intended to neither identify key or critical elements of all embodiments nor delineate the scope of any or all embodiments of the present disclosure. Its sole purpose is to present one or more embodiments in a simplified form as a prelude to the more detailed description of the disclosure that follows. To the accomplishment of the foregoing, the one or more embodiments of the present disclosure include the features described and exemplarily pointed out in the claims.

### BRIEF DESCRIPTION OF THE DRAWINGS

The accompanying drawings, which are incorporated into and constitute a part of this specification, illustrate one or more example embodiments of the present disclosure and, together with the detailed description, serve to explain their principles and implementations.
Fig. 1 illustrates a block diagram of a system for modeling the behavior of game elements during a remote game according to an example.
Fig. 2 illustrates a flowchart of a method for modeling the behavior of game elements during a remote game according to an example.
Fig. 3 illustrates a block diagram of a general-purpose computer system on which the disclosed system and method can be implemented according to an example.

### DETAILED DESCRIPTION

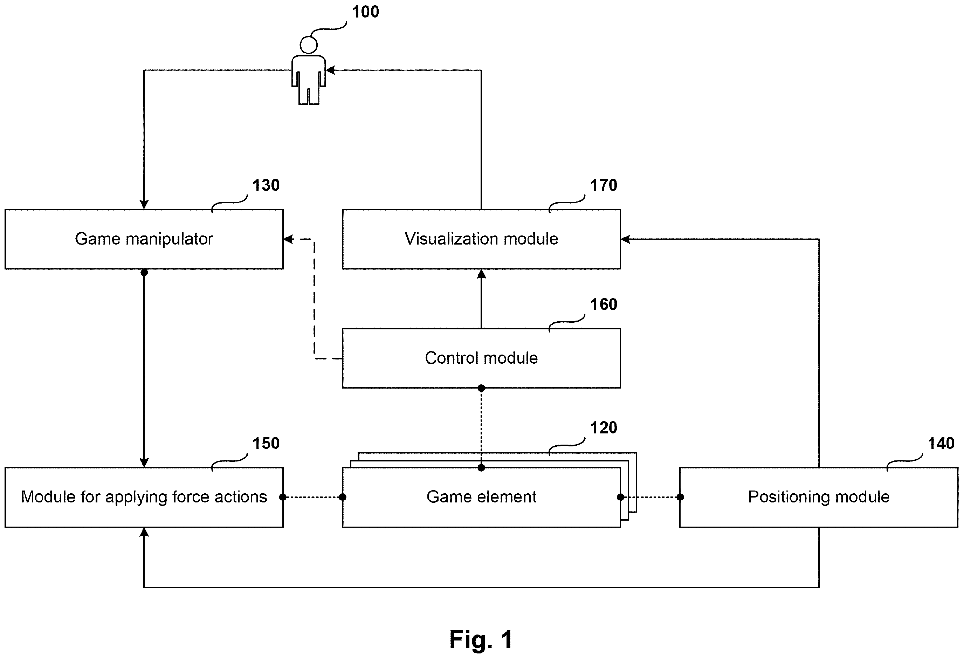

Fig. 1 illustrates a block diagram of a system for modeling the behavior of game elements during a remote game according to an example. A remote game between players is a game during which game elements and players are located at distance from each other, preventing a direct interaction of the players with the game elements (for example, the players are not able to directly apply force actions to the game elements). The system for modeling the behavior of game elements during a remote game between two or more users **100** includes game elements **120**, a game manipulator **130**, a positioning module **140**, a module for applying force actions **150**, a control module **160** and a visualization module **170**.

For simplicity, the users **100.1** and **100.2** are represented as a single user **100**, and the playing field **120.1** and the game elements **120.2** are represented solely as game elements **120.**

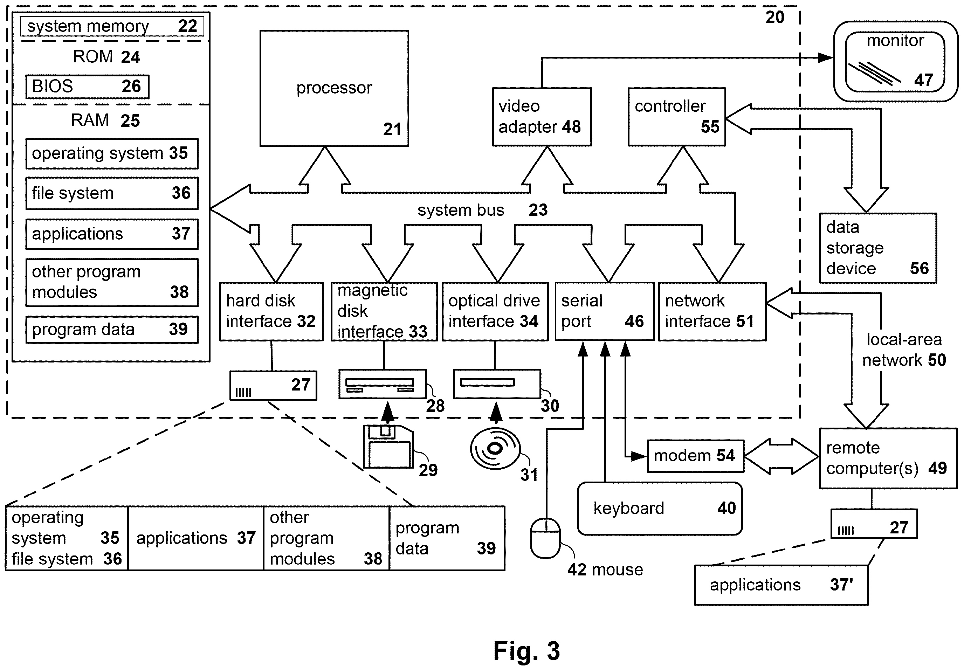

In one example, the game manipulator **130**, the positioning module **140**, the module for applying force actions **150** and the visualization module **170** can be computer peripheral devices, while the control module **160** can be a component of a general-purpose computer system, a personal computer, or a server, as described in Fig. 3.

In some examples, one of the game elements **120** may be a playing field, or material object on which the other game elements **120** are arranged. In some examples, the playing field is a billiard table, and the game element arranged on the playing field is a billiard ball. For example, the set of all game elements **120** present in the system for modeling the behavior of game elements during a remote game is a billiard table for playing snooker, 1 white, 6 colored, and 15 red balls of sizes, weight, material and shape corresponding to the rules of playing snooker.

In one example, the game elements **120** are removed from the user **100** such that the user 100 in performing the physical action is not able to directly apply a force action to the game elements. For example, the user #1 **100.1** may be in one city, user #2 **100.2** in another, and the billiard table with billiard balls in a third.

In one example, a game element **120** may be a material object whose spatial coordinates and physical properties are determined by the physical parameters of the game element 120. In one example, the physical properties of each game element **120** may include:
- the physical dimensions,
- the speed of movement as a vector quantity (including the direction of movement and the scalar value of the speed of movement),
- the coefficient of friction of the surface.

For example, in the case when the game elements **120** are a billiard table and billiard balls, the physical properties for the game elements 120 may include the radii of the balls, their spatial coordinates, the initial speeds, the coefficients of friction of the cloth of the playing field and the surface of the billiard balls.

The game manipulator **130** is configured to detect a physical action performed by the user **100** in order to apply a force action to at least one game element **120**. The game manipulator **130** may be further configured to calculate the physical parameters characterizing the detected physical action, and change its state on the basis of data obtained from the control module 160. The state of the game manipulator **130** may include at least the vector speed of movement of the game manipulator **130** (such as a decelerating motion), the amplitude and frequency characteristics of vibration of the game manipulator **130**, and the temperature characteristics of the game manipulator **130**. The game manipulator **130** may be further configured to then transmit the calculated parameters to the module for applying force actions **150**.

The state of the game manipulator **130** characterizes at least its
- behavior (such as the force of vibration),
- physical characteristics (such as geometric dimensions);

In one example, each user **100** employs their own respective instance of a game manipulator **130** in order to apply the force action to at least one game element **120.**

In one example, the game manipulator **130**, in order to detect a physical action performed by the user **100,** may capture the motion in a contact manner or a noncontact manner. To capture the motion in a contact manner, the game manipulator **130** can use sensors attached to the user **100** or built into the game manipulator **130** to obtain sensor data indicative of the motion. To capture motion in a noncontact manner, the game manipulator **130** can use video cameras, motion sensors, and so forth to obtain other data indicative of the motion.

In the example in which the game elements **120** are a billiard table and billiard balls (i.e., for a remote billiards game), the contact-type game manipulator **130** can be a sensor-type game controller, designed in the shape of a cue stick, having a corresponding weight and balance and containing sensors designed to determine the physical actions being performed by the user **100** and calculate the physical parameters characterizing the determined physical actions.

In one example, the non-contact game manipulator **130** can be a motion sensing input device, such as the Kinect™ system made available by Microsoft. The user **100** can perform movements of aiming and striking a ball with a cue stick (there need not be any cue stick at all in the hands of the user **100** for this, nor any billiard table on which the game is being played), the motion sensing input device performs a video recording of the actions of the user **100** (thus digitizing their actions), identifies the movements being performed, and calculates values of the physical parameters of the movements being performed by the user **100**, such as the speed of impact, the acceleration of impact, the vector of motion, the torsion, and so on. In the case of using a contact-type sensor game manipulator **130**, the above indicated physical parameters are obtained by the game manipulator **130** from sensors installed in the game controller or they are calculated on the basis of data obtained from other sensors of the game manipulator **130**.

In one example, the game manipulator **130** may calculate the physical parameters of the physical action being performed include at least:
- the vector and magnitude of the speed of performance of the physical action;
- the vector and magnitude of the momentum of performance of the physical action;
- the vector and magnitude of the angular momentum of performance of the physical action; and
- the energy transmitted as a result of performance of the physical action.

In one example, the game manipulator 130 changes its state on the basis of the behavior parameters of the game manipulator 130 (i.e., the behavior parameters of the game elements characterize the change in state of the game manipulator), such as the vector speed of movement of the game manipulator **130**, the amplitude and frequency characteristics of the vibration of the game manipulator **130**, and the temperature characteristics of the game manipulator **130**, which are obtained from the control module **160**. For example, the game manipulate **130** changes its state based on a speed vector indicating a decelerating motion, thereby creating a feeling in the user of a force action of the game manipulator **130** on the physical object, even though no such force action is performed. In another example, in the case of using a contact-type game manipulator **130** in the form of a cue stick, the mentioned manipulator when striking the ball can simulate the vibrations occurring during impact, the resistance to impact, and so forth. The behavior parameters of the game elements **120** characterize the change in state of the game manipulator **130**.

In one example, the positioning module **140** is configured to determine the parameters of at least two game elements **120**. The parameters of the game elements may determine the mutual arrangement and physical properties of the game elements **120** and characterize the states of the mentioned game elements. The positioning module **140** may be further configured to change the state of at least one game element **120** (such as the position of the game element **120**) on the basis of the data obtained from the control module **160,** and transmit the parameters of the game elements previously determined by the positioning means **140** to the module for applying force actions **150** and to the visualization module **170.**

In one example, the physical properties of the game elements **120** may include:
- the physical dimensions;
- the weight;
- the shape;
- the vector velocity;
- the vector acceleration;
- the moment of inertia:
- the angular momentum;
- the kinetic and potential energy possessed by the game element.

Moreover, the positioning module **140** enables a modification of the playing field **120** on the basis of previously specified data (such as the type of game) or data received from the control module **160.** In one example, modification of the playing field **120** may include changing the geometry of the playing field **120**, such as changing the physical dimensions of the playing field, changing the number and disposition of game elements **120** on the playing field, and so forth. In other examples, modification of the playing field **120** may also include changing the characteristics of the surface of the playing field **120**, for example, changing the force of friction of the surface of the playing field, changing the hardness of the surface of the playing field.

For example, for different types of billiards (e.g., Russian billiards, pool, snooker, carom billiards, and so forth), billiard tables of different shape are used, with different dimensions and arrangements of pockets. The playing field **120** can be arranged so that it can dynamically alter its physical dimensions (due to movable tiles forming the surface of the billiard table) depending on the chosen type of billiard game. Similarly, the billiard pockets can change their dimensions (due to being designed in the form of diaphragms) and position (by moving the physical design of the pocket in the necessary position at the edge of the billiard table). Depending on which type of billiard game is chosen, billiard balls of corresponding size, weight, and other physical properties are also chosen.

The module for applying force actions **150** may be configured to determine the game element **120** which needs to be subjected to the force action on the basis of the parameters of the game elements as determined by positioning module **140** and the physical parameters of the detected physical action as calculated by the game manipulator **130.** The module for applying force actions **150** may be also configured to calculate the parameters of the force action on the determined game element **120** and apply the force action to the determined game element **120** in accordance with the calculated parameters of the force action.

In one example, the force action is applied to a game element mechanically, by striking the game element **120** with the module for applying force actions **150.** In some examples, the force action may be applied to a game element by transfer of an electromagnetic pulse to the game element **120** from the module for applying force actions **150.**

For example, for a billiard table **120.1** and billiard balls **120.2**, the system of applying mechanical force actions **150** to the billiard ball **120.2** can be realized as follows: a system travels on guideways above the billiard table, including a striking rod and an electromagnetic coil, controlling the movement of the rod. This system is able to be positioned in all three planes and can be arranged in front of a billiard ball **120.2** such that the next strike by the striking rod will occur at the spot where the user **100** is aiming, and with such parameters of the force action (transfer of energy, momentum, etc.) as correspond to the physical action of the user **100.**

On the other hand, for the billiard table **120.1** and billiard balls **120.2** the system of applying force actions **150** to a billiard ball **120.2** with the aid of an electromagnetic pulse can be realized as follows: a system of electromagnets is located beneath the billiard table **120.1,** which upon receiving a command forms an electromagnetic pulse of the necessary structure (with structure of the electromagnetic pulse meaning the duration, the amplitude and frequency characteristics of the electromagnetic pulse, and so on) so as to impart to the billiard ball **120.2** (inside which is material possessing ferromagnetic properties) the necessary energy, momentum, vector of motion (including torsion), and so forth. The electromagnetic pulse can be prolonged, imitating a cue strike with backspin.

In one example, the module for applying force actions **150** may calculate the parameters of the force action including one or more temporal characteristics of the force action (such as the timestamp for the start of application of the force action and the time interval during which the force action is applied). In some examples, the module for applying force actions **150** may calculate a position of the force action on the game element **120,** meaning by position of the force action the spot in the game element **120** (particularly on the surface of the game element **120**) where the force action is applied. In other examples, the module for applying force actions **150** may calculate a force applied to the game element **120** at the determined position and at the determined time.

In one example, the force applied to the game element **120** may be characterized by at least the physical force acting on the game element **120**; the momentum transferred to the game clement **120**; and the energy transferred to the game element.

The control module **160** may be configured to track the behavior of the game elements **120** during the exerting of the force action by the module for applying force actions **150**. The behavior of a game element **120** may be the change in the characteristics of the game element 120 over time (such as the vector velocity, the spatial coordinates of the game element 120 and so forth). The control module **160** is further configured to determine the parameters of that behavior, the parameters of the behavior characterizing the change in state of at least one game element **120**, the state of the game element **120** being the set of characteristics of the game element **120** (such as the vector velocity, the spatial coordinates of the game element **120** and so forth). The control module **160** may be configured to transmit the determined behavior parameters to the positioning module **140** in order to change the state of at least one game element **120**, and transmit the determined behavior parameters to the visualization module **170.**

In some examples of the system, the control module **160** may include one or more input devices and sensor devices, including video cameras, motion sensors, range finders, thermal imagers, to track the behavior of the game elements **120**, and also software to determine the parameters of that behavior.

In one example, the control module **160** may implement feedback from the game manipulator **130**, which includes in a change in state of the game manipulator **130** on the basis of the behavior parameters of the game elements **120** to which the force action has been applied.

In one example, the control module **160** depending on the parameters determined for the game elements **120** can send the data to the positioning module **140** for the purpose of changing the physical properties of the game elements **120.**

For example, during a game of snooker, after a colored billiard ball **120.2** drops into a pocket, the control module **160** determines the spatial coordinates of that billiard ball **120.2** and sends the data to the positioning module **140** in order to move that billiard ball **120.2** back onto the billiard table **120.1** in a predetermined position (according to the rules of snooker).

The visualization module **170** may be configured to generate a model of the behavior of the game elements **120** on the basis of the parameters of the game elements as determined by the positioning module **140** and the behavior parameters of the game elements as determined by the control module **160.** In one example, the model of the behavior of the game elements **120** may include a set of virtual multidimensional models (such as 3D models) of the game elements **120**, where each such model is matched up with unique temporal characteristics (such as the timestamp and the interval of time) during which said model is current. In other examples, the module of the behavior of the game elements **120** may include a video stream recorded by the visualization module **170** of the generated playing field **120.**

In one example, the visualization module **170** after generating the model of behavior of the game elements carries out a visualization (for example, a display on the computer monitor) of the game elements **120.**

In one example, for the purpose of visualization of the generated behavior model of the game elements **120** there are used at least:
- virtual reality goggles or a virtual reality helmet worn by the user **100** (so the user can see the billiard table and the balls moving on top of it as if playing on a real billiard table);
- a monitor on whose screen the 3D model is displayed;
- game elements similar to those used in the system for simulating the behavior of the game elements during a remote game.

For example, as a result of the simulation of the behavior of the game elements **120** during a remote game, parameters have been obtained for the game elements **120** (such as the coordinates of the position of the game elements **120** on the playing field). On the playing field of the user **100,** the positioning module **140** sets up the game elements **120** according to the parameters obtained.

In one example, the visualization of the behavior model of the game elements **120** generated by the visualization module **170** is done by module for repositioning a copy of the game elements **120** available to the user **100** at least
- manually, by the efforts of the user **100**;
- automatically with the use of a module similar to the positioning module **140**; on the basis of the data provided by the visualization module **170** in the form of
- a set of data describing the positions (such as the three-dimensional coordinates) of the game elements **120**;
- light markers of the position of the game elements **120** (for example, as generated by a system of lasers).

For example, if the user **100.1** is playing billiards at a billiard table, the visualization of the behavior model of the billiard balls **120.2** may include lighting up on said billiard table 120.1 the positions occupied by the billiard balls **120.2** after a shot is made by the user **100.2.** Thus, the user **100.1**, having placed the billiard balls **120.2** at the indicated positions, obtains a situation similar to the position on the remote billiard table **120.1.**

After the user has performed the physical actions resulting in the application of a force action to the billiard balls on the remote billiard table, the billiard balls enter into movement and after a certain time come to a halt. After this, the control module **160** determines the positions of the billiard balls, and the data so obtained is sent to the visualization module **170.** The visualization module **170** with the aid of a laser lights up the spots on the table where the billiard balls need to be placed in order for the arrangement of the balls to be identical to the arrangement of the balls on the remote billiard table.

Thus, with the use of the module for the system for modeling the behavior of game elements during a remote game, it becomes possible to organize a remote game of several users **100** with each other, while each of the users **100** taking part in the game can either possess the necessary equipment for the game (such as a billiard table) or not (only a virtual reality helmet).

Consider the working of the system for modeling the behavior of game elements during a remote game on the example of the organizing of a remote game of billiards between two users. Both users #1 **100.1** and #2 **100.2** are playing remotely, i.e., they are not standing next to the billiard table. User #1 **100.1** is using, as game manipulator **130**, a contact-type sensor game controller designed in the form of a cue stick, while user #2 **100.2** is using a noncontact-type sensor game controller; thus, during the game, user #2 **100.2** will take shots with his empty hand, and the game manipulator 130 will interpret these motions as shots with a cue stick. To visualize the results of the game, user #1 **100.1** employs virtual reality goggles, while user #2 **100.2** employs the screen of a projector onto which a video is translated from the chosen perspective.

Before the start of the game, the users select the type of game (such as snooker, Russian billiards, American pool, carom billiards, and so on) and send their choice to the control module **160.** Depending on the chosen type of game and the specified game situation (for example, the position of the black ball when drawing for the right of the first shot), the control module **160** will send corresponding commands to the positioning module **140** to change the geometry of the billiard table **120** and place the balls **120** on the billiard table **120** in the order specified by the rules of the chosen game. A change in the modification of the billiard table **120** will be done by moving the tiles which form the sides and surface of the billiard table **120,** and also by generating pockets of the required size. Likewise depending on the chosen type of billiards, balls of the necessary properties (size, color, etc.) will be chosen, and additional game elements (chips for carom billiards, etc.) will also be chosen.

Once the billiard table **120** and the game elements **120** are ready to play (the necessary dimensions, properties of the surface and sides have been established, the balls have been set up in the required order per the rules), the active phase of the game begins. User #1 **100.1** takes a shot with the game manipulator "cue stick" **140**, judging by the image produced on his virtual reality goggles **170.** The sensors located in the cue stick determine the parameters of movement and the force with which that movement occurs. For example, these parameters may be the velocity and acceleration of movement of the cue stick, the direction of movement of the cue stick, the torsion of the cue stick, and so forth, and are transmitted to the module for applying force actions **150.** The module for applying force actions **150** is a system of electromagnets situated beneath the billiard table **120**. On the basis of the data obtained and according to the laws of electromagnetism, a calculation is done as to where on the table and in what configuration an electromagnetic pulse needs to be generated in order to produce a force action identical to that producing the hitting of the billiard ball by the cue stick. Since an electromagnetic system is used in the present example for controlling the movement of the billiard balls, special billiard balls are used which are identical in weight, surface parameters (force of friction etc.), balance, and so forth, to the billiard balls used when playing tabletop billiards, but containing materials having ferromagnetic properties and reacting to the electromagnetic pulses generated by the module for applying force actions **150**.

After taking the shot, the control module **160** tracks the movement of the balls **120** over the billiard table **120**, determines their spatial coordinates and transmits them to the visualization module **170** of the users **100.** The visualization module **170** on the basis of the received data create a virtual model of the billiard table and the billiard balls on it. The control module **160** likewise tracks the course of the game, keeps score in the context of the established rules, and modifies the playing field **120** or the position of the balls **120** in the context of the established rules (for example, when playing snooker, after a successful shooting of a colored ball into a pocket that ball is taken out of the pocket by the positioning module **140** on command from the control module **160** and placed in the established position for that ball, while in the case of a miss or a miscue the previous position of the balls on the table is restored by the positioning module **140**).

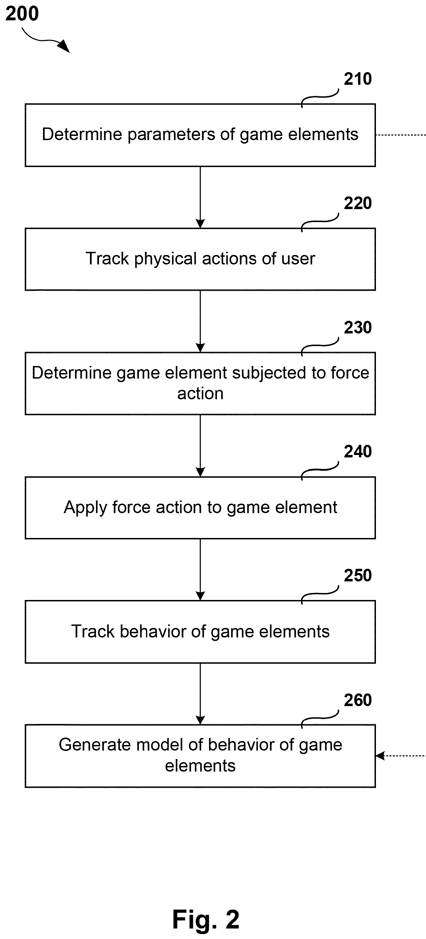

**Fig. 2** illustrates a flowchart of a method **200** for modeling the behavior of game elements during a remote game according to an example.

The flowchart of the method **200** for modeling the behavior of game elements during a remote game contains the following steps: step **210**, in which the parameters of the game elements **120** are determined, step **220**, in which the physical actions of the user **100** are tracked, step **230**, in which the game element **120** is determined for applying the force action, step **240**, in which the force action is applied to the game element **120**, step **250**, in which the behavior of the game elements **120** is tracked, and step **260**, in which the behavior model of the game elements **120** is generated.

In step **210** with the aid of the positioning module **140** the parameters of at least two game elements **120** are determined, these being material objects whose mutual arrangement and physical properties are determined by the parameters of the game elements, characterizing the states of those game elements.

In step **220** with the aid of the game manipulator **130** the physical action performed by the user **100** in order to apply a force action to at least one game element **120** is tracked, and upon detection of the physical action the physical parameters characterizing that physical action are calculated.

In step **230** with the aid of the module for applying force actions **150** and on the basis of the parameters determined in step **210** for at least one game element **120** and the physical parameters calculated in step **220**, the game element **120** is determined which needs to be subjected to the force action, and the parameters of that force action on the determined game element **120** are calculated.

In step **240** with the aid of the module for applying force actions **150** the force action is applied to the game element **120** determined in step **230** in accordance with the parameters of the force action calculated in step **230.**

In step **250** with the aid of the control module **160** the behavior of the game elements 120 is tracked and the parameters of the mentioned behavior are determined, the behavior parameters characterizing the change in state of the game elements **120**.

In step **260** with the aid of the visualization module **170** a behavior model of the game elements **120** is generated on the basis of the parameters determined in step **210** for the game elements **120** and the behavior parameters determined in step **250** for the game elements **120**.

Consider the working of the method **200** for modeling the behavior of game elements during a remote game on the example of organizing a remote game of tabletop soccer between two users. In order to visualize the game process, the user #1 **100.1** uses a virtual reality helmet, and the user #2 **100.2** uses a game table, equipped for playing tabletop soccer and equipped with a module for providing remote control. The action on the game elements **120** is applied by the user #1 **100.1** via a game manipulator **130**, and by user #2 **100.2** via handles with which the game table is outfitted. Thus, user #1 **100.1** will see the game as translated onto the display of the virtual reality helmet and control the game with the aid of the game manipulator **130**, being a contact-type sensor game controller of "virtual reality gloves" kind, i.e., gloves equipped with sensors tracking the movement of the arms, hands, fingers, and so on.

At the start of the game, before the users **100** have begun to perform physical actions, the control module **160** resets the score to zero (0:0) and sends commands to the positioning module **140** to place the models of the soccer players in the starting positions, clear the playing field 120.1 of balls 120.2, if any are present on the playing field 120.1, and also set the ball 120.2 at the center of the field and prepare it for dropping.

After the game has begun, each user **100** tries to intercept the ball 120.2 with his players, moving about on the playing field 120.1, and drive it into the opposing goal posts. The models of the soccer players are rigidly attached to rods, and the rods themselves can perform translatory and rotational movements, which can be controlled by the users 100. For this purpose, the user #1 100.1 performs translatory movements with his arms and rotational movements with his hands, which are tracked by the sensors mounted on the "virtual reality gloves" worn by him. The movements are digitized, and the digitized data is used to determine the characteristics describing the actions of the user #1 100.1 - the velocity and acceleration of the translatory movement of the arm (which will afterwards be interpreted as a translatory movement of the rod with the models of soccer players attached to it), the angular velocity and acceleration of the rotational movement of the hand (which will afterwards be interpreted as a rotational movement of the rod with the models of soccer players attached to it). With the use of precision sensors, it is possible to track not only changes in movement of the first and second order (velocity and acceleration), but also changes in movement of higher orders, making the simulation of the game process more accurate. After the characteristics are determined, they are sent to the module for applying force actions **150.** The module for applying force actions **150** uses the received characteristics to determine the rod to which the force action should be applied. The obtained characteristics are converted into a signal going to electric motors executing the movement of the selected rod, both translatory and rotational. In this way, a striking of the ball by the model soccer players is performed. From the mentioned rod, the sensors of the module for applying force actions can determine the characteristics of vibration experienced by the rod, the velocity and acceleration of movement, and so forth, and send them to the game manipulator **130.** Thus, the user #1 100.1 will not only control the soccer player models, but also feel the recoil reaction of the game manipulator 130 (for example, upon striking the ball there can occur a fixation of the ball between the soccer player model and the surface of the playing field **120,** causing an abrupt stoppage of both translatory and rotational movement of the rod, which is noticeably felt by the arm when playing on a physical table). In this way, the user #1 100.1 can more accurately control his soccer player models.

As the game proceeds, the control module will carry out a constant (in real time) monitoring of the playing field: a video and audio recording will be produced, and the characteristics of the playing field 120.1 and the game elements 120.2 (the ball and the soccer player models attached to the rods) will be calculated. The video and audio data will be sent to the virtual reality helmet 170 of user #2 100.2. Thus, user #1 100.1 experiences the effect of being present, i.e., a state as if he were playing on a physical table directly in front of him. For a more accurate visualization, the position of the virtual reality helmet 170 can be tracked in order to make a video recording of the playing field 120.1 from such positions and from such a perspective as if the user #1 100.1 were located next to the playing field.

From the characteristics determined for the playing field 120.1 and the game elements 120.2 the control module 160 controls the course of the game: if the ball is driven home, the control module 160 changes the score and sends commands to the positioning module **140** to place the soccer player models in the starting positions, as well as set the ball **120.2** at the center of the field and prepare it for dropping.

**Fig. 3** is a diagram illustrating a general-purpose computer system **20** on which embodiments of systems and methods for scanning web pages may be implemented in accordance with an example. The computer system **20** may be configured as the control module **140** and other modules, described earlier.

As shown, the computer system **20** (which may be a personal computer or a server) includes a central processing unit **21**, a system memory **22** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20**, such as those at the time of loading the operating system with the use of the ROM **24.**

The computer system **20**, may also comprise a hard disk **27** for reading and writing data, a magnetic disk drive **28** for reading and writing on removable magnetic disks 29, and an optical drive **30** for reading and writing removable optical disks **31**, such as CD-ROM, DVD-ROM and other optical media. The hard disk **27**, the magnetic disk drive **28**, and the optical drive **30** are connected to the system bus **23** across the hard disk interface **32**, the magnetic disk interface **33** and the optical drive interface **34**, respectively. The drives and the corresponding computer information media are power-independent modules for storage of computer instructions, data structures, program modules and other data of the computer system **20.**

An example comprises a system that uses a hard disk **27**, a removable magnetic disk **29** and a removable optical disk **31** connected to the system bus **23** via the controller **55**. It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36**, in which the operating system **35**, may be stored, as well as additional program applications **37**, other program modules **38**, and program data **39**. A user of the computer system **20** may enter commands and information using keyboard **40**, mouse **42**, or any other input device known to those of ordinary skill in the art, such as, but not limited to, a microphone, joystick, game controller, scanner, *etc..* Such input devices typically plug into the computer system **20** through a serial port **46**, which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47**, the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54**, which may be an internal or external device, may be connected to the system bus **23** by a serial port **46.** It will be appreciated by those of ordinary skill in the art that said network connections are nonlimiting examples of numerous well-understood ways of establishing a connection by one computer to another using communication modules.

In various embodiments, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various embodiments, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 3, *supra*). Accordingly, each module may be realized in a variety of suitable configurations, and should not be limited to any particular implementation exemplified herein.

In the interest of clarity, not all of the routine features of the embodiments are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various embodiments disclosed herein encompass known equivalents to the known modules referred to herein by way of illustration. Moreover, while embodiments and applications have been shown and described, it would be apparent to those skilled in the art having the benefit of this disclosure that many more modifications than mentioned above are possible without departing from the inventive concepts disclosed herein, if they fall within the scope of the invention as defined by the appended claims.

## Claims

1. A method for modeling behavior of game elements (120) during a remote game between at least two users (100), the method comprises:
determining, by a processor of a computer, during the remote game between the at least two users, parameters for at least two game elements (120) representing material objects, wherein mutual disposition and physical properties of the material objects are determined by the parameters of the game elements (120), wherein the parameters for the game elements (120) characterize the states of the game elements (120), wherein the game elements comprise physical balls situated on a physical playing field, wherein the game elements (120) are remote from the two users (100) so that the users (100) in performing a physical action are not able to directly apply a force action to the game elements (120);
responsive to detecting, by at least a sensor, a physical action performed by a user (100) in order to exert a force action on at least one game element (120), calculating, by a game manipulator (130), one or more physical parameters characterizing the physical action;
determining, by a device, the game element (120) to be subject to the detected physical action based on the determined parameters of at least one game element (120) and the calculated physical parameters;
calculating, by the device, the parameters of that force action on the determined game element (120);
performing, by the device, a force action on the physical ball represented by the determined game element (120) in accordance with the calculated parameters of the force action by at least one of: mechanically by striking the physical ball (120) and by transfer of an electromagnetic pulse to the physical ball (120);
determining, by the processor of the computer, one or more behavior parameters for the game elements (120), wherein the behavior parameters characterize a change in state of the game elements (120), by tracking the movement of the physical balls with one or more sensors;
generating, by the processor of the computer, a behavior model of the game elements (120) based on the determined parameters of the game elements (120) and the determined behavior parameters of the game elements (120); and
visualizing, using the generated behavior model, the results of the game on respective displays employed by the at least two users.

2. The method according to claim 1, wherein spatial coordinates and physical properties of the material objects corresponding to the game elements (120) are determined by the physical parameters of the game elements (120).

3. The method according to any of claims 1 to 2, wherein the physical parameters of the physical action include at least one of a vector and magnitude of a velocity of application of the physical action, a vector and magnitude of a momentum of application of the physical action, a vector and magnitude of an angular momentum of application of the physical action, and energy transmitted as a result of the application of the physical action.

4. The method according to any of claims 1 to 3, wherein the parameters of the force action include at least one of a time of the force action; a position of the force action on the game element (120); a force exerted on the game element (120) in the determined position and at the determined time.

5. The method according to any of claims 1 to 4, wherein the force exerted on the game element (120) is **characterized by** at least one of a physical force acting on the game element (120); a momentum transmitted to the game element (120); and energy transmitted to the game element (120).

6. The method according to any of claims 1 to 5, wherein the behavior model of the game elements (120) includes at least one of: a set of virtual three-dimensional (3D) models of the game elements (120), where each said 3D model is coordinated with a time during which said 3D model was the current one; and a video stream recorded of a game element (120) comprising a playing field.

7. A system for modeling behavior of game elements (120) during a remote game between at least two users (100), wherein the system comprises:
a positioning module (140) configured to determine, during the remote game between the at least two users, parameters for at least two game elements (120) representing material objects, wherein mutual disposition and physical properties of the material objects are determined by the parameters of the game elements (120), wherein the parameters for the game elements (120) characterize the states of the game elements (120), wherein the game elements comprise physical balls situated on a physical playing field, wherein the game elements (120) are remote from the two users (100) so that the users (100) in performing a physical action are not able to directly apply a force action to the game elements (120);
one or more game manipulators (130) configured to detect a physical action performed by a user (100), via a sensor, in order to exert a force action on at least one game element (120) and calculate one or more physical parameters characterizing the physical action;
a module for performing force actions (150) configured to:
determine the game element (120) to be subject to the detected physical action based on the determined parameters of at least one game element (120) and the calculated physical parameters,
calculate the parameters of that force action on the determined game element (120),
perform a force action on the physical ball represented by the determined game element (120) in accordance with the calculated parameters of the force action by at least one of: mechanically by striking the physical ball (120) and by transfer of an electromagnetic pulse to the physical ball (120);
a control module (160) configured to determine one or more behavior parameters for the game elements (120), by tracking the movement of the physical balls with one or more sensors, wherein the behavior parameters characterize a change in state of the game elements (120);
a visualization module (170) configured to generate a behavior model of the game elements (120) based on the determined parameters of the game elements (120) and the determined behavior parameters of the game elements (120); and
visualize, using the generated behavior model, the results of the game on respective displays employed by the at least two users.

8. The system according to claim 7, wherein the at least two users (100) each employ one of the game manipulators (130) to perform the force action on at least one game element (120).

9. The system according to any of claims 7 to 8, wherein the behavior parameters of the game elements (120) characterize the change in state of the game manipulator (130).

10. The system according to any of claims 7 to 9, wherein the control module (160) includes at least one of a video camera, a motion sensor, a range finder, and a thermal imager for tracking the behavior of the game elements (120).

11. The system according to any of claims 7 to 10, wherein the control module (160) is configured to implement a feedback from the game manipulator (130), having in a change in state of the game manipulator (130) based on the behavior parameters of the game elements (120) to which the force action has been applied.

12. The system according to any of claims 7 to 11, wherein the force exerted on the game element (120) is **characterized by** at least one of a physical force acting on the game element (120); a momentum transmitted to the game element (120); and energy transmitted to the game element (120).

13. The system according to any of claims 7 to 12, wherein the behavior model of the game elements (120) includes at least one of: a set of virtual three-dimensional (3D) models of the game elements (120), where each said 3D model is coordinated with a time during which said 3D model was the current one; and a video stream recorded of a game element (120) comprising a playing field.

## Patentansprüche

1. Verfahren zum Modellieren des Verhaltens von Spielelementen (120) während eines Remote-Spiels zwischen wenigstens zwei Benutzern (100), wobei das Verfahren umfasst:
Bestimmen, durch einen Prozessor eines Computers, während des Remote-Spiels zwischen den wenigstens zwei Benutzern, von Parametern für wenigstens zwei Spielelemente (120), welche materielle Objekte darstellen, wobei eine gegenseitige Anordnung und physikalische Eigenschaften der materiellen Objekte durch die Parameter der Spielelemente (120) bestimmt werden, wobei die Parameter für die Spielelemente (120) die Zustände der Spielelemente (120) charakterisieren, wobei die Spielelemente physische Bälle umfassen, welche auf einem physischen Spielfeld angeordnet sind, wobei die Spielelemente (120) von den zwei Benutzern (100) entfernt sind, so dass die Benutzer (100) bei einem Durchführen einer physischen Aktion nicht dazu in der Lage sind, eine Krafteinwirkung direkt auf die Spielelemente (120) aufzubringen;
als Reaktion auf ein Detektieren, durch wenigstens einen Sensor, einer physischen Aktion, welche von einem Benutzer (100) durchgeführt wird, um eine Krafteinwirkung auf wenigstens ein Spielelement (120) auszuüben, Berechnen, durch einen Spielmanipulator (130), eines oder mehrerer physikalischer Parameter, welche die physische Aktion charakterisieren;
Bestimmen, durch eine Vorrichtung, dass das Spielelement (120) Subjekt für die detektierte physische Aktion ist, auf Grundlage der bestimmten Parameter wenigstens eines Spielelements (120) und der berechneten physikalischen Parameter;
Berechnen, durch die Vorrichtung, der Parameter dieser Krafteinwirkung auf das bestimmte Spielelement (120);
Durchführen, durch die Vorrichtung, einer Krafteinwirkung auf den physischen Ball, welcher durch das bestimmte Spielelement (120) dargestellt ist, im Einklang mit den berechneten Parametern der Krafteinwirkung durch wenigstens eines aus: mechanisch durch Treffen des physischen Balls (120) und durch Übertragen eines elektromagnetischen Impulses auf den physischen Ball (120);
Bestimmen, durch den Prozessor des Computers, eines oder mehrerer Verhaltensparameter für die Spielelemente (120), wobei die Verhaltensparameter eine Zustandsänderung der Spielelemente (120) charakterisieren, durch ein Verfolgen der Bewegung der physischen Bälle mit einem oder mehreren Sensoren;
Generieren, durch den Prozessor des Computers, eines Verhaltensmodells der Spielelemente (120) auf Grundlage der bestimmten Parameter der Spielelemente (120) und der bestimmten Verhaltensparameter der Spielelemente (120); und
Visualisieren, unter Verwendung des generierten Verhaltensmodells, der Ergebnisse des Spiels auf jeweiligen Anzeigen, welche von den wenigstens zwei Benutzern eingesetzt werden.

2. Verfahren nach Anspruch 1, wobei räumliche Koordinaten und physikalische Eigenschaften der materiellen Objekte, welche den Spielelementen (120) entsprechen, durch die physikalischen Eigenschaften der Spielelemente (120) bestimmt werden.

3. Verfahren nach einem der Ansprüche 1 bis 2, wobei die physikalischen Parameter der physischen Aktion wenigstens eines umfassen aus einem Vektor und einer Magnitude einer Geschwindigkeit des Aufbringens der physischen Aktion, einem Vektor und einer Magnitude eines Impulses des Aufbringens der physischen Aktion, einem Vektor und einer Magnitude eines Drehimpulses des Aufbringens der physischen Aktion und als ein Ergebnis des Aufbringens der physischen Aktion übertragener Energie.

4. Verfahren nach einem der Ansprüche 1 bis 3, wobei die Parameter der Krafteinwirkung wenigstens eines umfassen aus einer Zeit der Krafteinwirkung; einer Position der Krafteinwirkung an dem Spielelement (120); einer an der bestimmten Position und zu der bestimmten Zeit auf das Spielelement (120) ausgeübten Kraft.

5. Verfahren nach einem der Ansprüche 1 bis 4, wobei die auf das Spielelement (120) ausgeübte Kraft durch wenigstens eines charakterisiert ist aus einer physischen Kraft, welche auf das Spielelement (120) wirkt, einem Impuls, welcher auf das Spielelement (120) übertragen wird; und Energie, welche auf das Spielelement (120) übertragen wird.

6. Verfahren nach einem der Ansprüche 1 bis 5, wobei das Verhaltensmodell des Spielelements (120) wenigstens eines umfasst aus: einem Satz virtueller dreidimensionaler (3D) Modelle des Spielelements (120), wobei jedes der 3D-Modelle mit einer Zeit koordiniert wird, während welcher das 3D-Modell das aktuelle war; und einem aufgezeichneten Videostream eines Spielelements (120), welcher ein Spielfeld umfasst.

7. System zum Modellieren des Verhaltens von Spielelementen (120) während eines Remote-Spiels zwischen wenigstens zwei Benutzern (100), wobei das System umfasst:
ein Positionierungsmodul (140), welches dazu eingerichtet ist, während des Remote-Spiels zwischen den wenigstens zwei Benutzern Parameter für wenigstens zwei Spielelemente (120) zu bestimmen, welche materielle Objekte darstellen, wobei eine gegenseitige Anordnung und physikalische Eigenschaften der materiellen Objekte durch die Parameter der Spielelemente (120) bestimmt sind, wobei die Parameter für die Spielelemente (120) die Zustände der Spielelemente (120) charakterisieren, wobei die Spielelemente physische Bälle umfassen, welche auf einem physischen Spielfeld angeordnet sind, wobei die Spielelemente (120) von den zwei Benutzern (100) entfernt sind, so dass die Benutzer (100) bei einem Durchführen einer physischen Aktion nicht dazu in der Lage sind, eine Krafteinwirkung direkt auf die Spielelemente (120) aufzubringen;
einen oder mehrere Spielmanipulatoren (130), welche dazu eingerichtet sind, mittels eines Sensors eine physische Aktion zu detektieren, welche von einem Benutzer (100) durchgeführt wird, um eine Krafteinwirkung auf wenigstens ein Spielelement (120) auszuüben, und einen oder mehrere physikalische Parameter zu berechnen, welche die physische Aktion charakterisieren;
ein Modul zum Durchführen von Krafteinwirkungen (150), welches eingerichtet ist zum:
Bestimmen, dass das Spielelement (120) Subjekt für die detektierte physische Aktion ist, auf Grundlage der bestimmten Parameter wenigstens eines Spielelements (120) und der berechneten physikalischen Parameter,
Berechnen der Parameter dieser Krafteinwirkung auf das bestimmte Spielelement (120),
Durchführen einer Krafteinwirkung auf den physischen Ball, welcher durch das bestimmte Spielelement (120) dargestellt ist, im Einklang mit den berechneten Parametern der Krafteinwirkung durch wenigstens eines aus: mechanisch durch Treffen des physischen Balls (120) und durch Übertragen eines elektromagnetischen Impulses auf den physischen Ball (120);
ein Steuermodul (160), welches dazu eingerichtet ist, durch ein Verfolgen der Bewegung der physischen Bälle mit einem oder mehreren Sensoren einen oder mehrere Verhaltensparameter für die Spielelemente (120) zu bestimmen, wobei die Verhaltensparameter eine Zustandsänderung der Spielelemente (120) charakterisieren;
ein Visualisierungsmodul (170), welches dazu eingerichtet ist, ein Verhaltensmodell der Spielelemente (120) auf Grundlage der bestimmten Parameter der Spielelemente (120) und der bestimmten Verhaltensparameter der Spielelemente (120) zu generieren; und
unter Verwendung des generierten Verhaltensmodells die Ergebnisse des Spiels auf jeweiligen Anzeigen zu visualisieren, welche von den wenigstens zwei Benutzern eingesetzt werden.

8. System nach Anspruch 7, wobei die wenigstens zwei Benutzer (100) jeweils einen der Spielmanipulatoren (130) einsetzen, um die Krafteinwirkung auf wenigstens ein Spielelement (120) durchzuführen.

9. System nach einem der Ansprüche 7 bis 8, wobei die Verhaltensparameter der Spielelemente (120) die Zustandsänderung des Spielmanipulators (130) charakterisieren.

10. System nach einem der Ansprüche 7 bis 9, wobei das Steuermodul (160) wenigstens eines aus einer Videokamera, einem Bewegungssensor, einem Entfernungsmesser und einer Wärmebildkamera zum Verfolgen des Verhaltens der Spielelemente (120) umfasst.

11. System nach einem der Ansprüche 7 bis 10, wobei das Steuermodul (160) dazu eingerichtet ist, auf Grundlage der Verhaltensparameter der Spielelemente (120), auf welche die Krafteinwirkung aufgebracht worden ist, eine Rückmeldung von dem Spielmanipulator (130) mit einer Zustandsänderung des Spielmanipulators (130) zu implementieren.

12. System nach einem der Ansprüche 7 bis 11, wobei die auf das Spielelement (120) ausgeübte Kraft durch wenigstens eines charakterisiert ist aus einer physischen Kraft, welche auf das Spielelement (120) wirkt, einem Impuls, welcher auf das Spielelement (120) übertragen wird; und Energie, welche auf das Spielelement (120) übertragen wird.

13. System nach einem der Ansprüche 7 bis 12, wobei das Verhaltensmodell des Spielelements (120) wenigstens eines umfasst aus: einem Satz virtueller dreidimensionaler (3D) Modelle des Spielelements (120), wobei jedes der 3D-Modelle mit einer Zeit koordiniert wird, während welcher das 3D-Modell das aktuelle war; und einem aufgezeichneten Videostream eines Spielelements (120), welcher ein Spielfeld umfasst.

## Revendications

1. Procédé de modélisation du comportement d'éléments de jeu (120) pendant un jeu à distance entre au moins deux utilisateurs (100), le procédé comprenant :
la détermination, par un processeur d'un ordinateur, pendant le jeu à distance entre les utilisateurs, au moins au nombre de deux, de paramètres d'au moins deux éléments de jeu (120) représentant des objets matériels, où une disposition mutuelle et des propriétés physiques des objets matériels sont déterminées par les paramètres des éléments de jeu (120), où les paramètres des éléments de jeu (120) caractérisent les états des éléments de jeu (120), où les éléments de jeu comprennent des balles physiques situées sur un terrain de jeu physique, où les éléments de jeu (120) sont à distance des deux utilisateurs (100), de sorte que les utilisateurs (100), dans la réalisation d'une action physique, ne sont pas capables d'appliquer directement une action de force aux éléments de jeu (120) ;
en réponse à la détection, par au moins un capteur, d'une action physique réalisée par un utilisateur (100) afin d'exercer une action de force sur au moins un élément de jeu (120), le calcul, par un manipulateur de jeu (130), d'un ou de plusieurs paramètres physiques caractérisant l'action physique ;
la détermination, par un dispositif, de l'élément de jeu (120) à soumettre à l'action physique détectée sur la base des paramètres déterminés d'au moins un élément de jeu (120) et des paramètres physiques calculés ;
le calcul, par le dispositif, des paramètres de cette action de force sur l'élément de jeu (120) déterminé ;
la réalisation, par le dispositif, d'une action de force sur la balle physique représentée par l'élément de jeu (120) déterminé conformément aux paramètres calculés de l'action de force, via au moins un élément parmi :
la frappe mécanique de la balle physique (120) et le transfert d'une impulsion électromagnétique à la balle physique (120) ;
la détermination, par le processeur de l'ordinateur, d'un ou de plusieurs paramètres de comportement des éléments de jeu (120), où les paramètres de comportement caractérisent un changement d'état des éléments de jeu (120), par le suivi du déplacement des balles physiques par un ou plusieurs capteurs ;
la génération, par le processeur de l'ordinateur, d'un modèle de comportement des éléments de jeu (120) sur la base des paramètres déterminés des éléments de jeu (120) et des paramètres de comportement déterminés des éléments de jeu (120) ; et
la visualisation, à l'aide du modèle de comportement généré, des résultats du jeu sur les écrans respectifs employés par les utilisateurs, au moins au nombre de deux.

2. Procédé selon la revendication 1, dans lequel les coordonnées spatiales et les propriétés physiques des objets matériels correspondant aux éléments de jeu (120) sont déterminées par les paramètres physiques des éléments de jeu (120).

3. Procédé selon l'une quelconque des revendications 1 et 2, dans lequel les paramètres physiques de l'action physique comportent au moins un élément parmi un vecteur et une grandeur d'une vitesse d'application de l'action physique, un vecteur et une grandeur d'un moment d'application de l'action physique, un vecteur et une grandeur d'un moment angulaire d'application de l'action physique, et une énergie transmise en résultat de l'application de l'action physique.

4. Procédé selon l'une quelconque des revendications 1 à 3, dans lequel les paramètres de l'action de force comportent au moins un élément parmi un moment de l'action de force ; une position de l'action de force sur l'élément de jeu (120) ; une force exercée sur l'élément de jeu (120) dans la position déterminée et au moment déterminé.

5. Procédé selon l'une quelconque des revendications 1 à 4, dans lequel la force exercée sur l'élément de jeu (120) est **caractérisée par** au moins un élément parmi une force physique agissant sur l'élément de jeu (120) ; un moment transmis à l'élément de jeu (120) ; et une énergie transmise à l'élément de jeu (120).

6. Procédé selon l'une quelconque des revendications 1 à 5, dans lequel le modèle de comportement des éléments de jeu (120) comporte au moins un élément parmi : un ensemble de modèles tridimensionnels (3D) virtuels des éléments de jeu (120), où chaque dit modèle 3D est coordonné avec un moment pendant lequel ledit modèle 3D était le modèle en cours ; et un flux vidéo enregistré d'un élément de jeu (120) comprenant un terrain de jeu.

7. Système de modélisation du comportement d'éléments de jeu (120) pendant un jeu à distance entre au moins deux utilisateurs (100), dans lequel le système comprend :
un module de positionnement (140) configuré pour déterminer, pendant le jeu à distance entre les utilisateurs, au moins au nombre de deux, des paramètres d'au moins deux éléments de jeu (120) représentant des objets matériels, où une disposition mutuelle et des propriétés physiques des objets matériels sont déterminées par les paramètres des éléments de jeu (120), où les paramètres des éléments de jeu (120) caractérisent les états des éléments de jeu (120), où les éléments de jeu comprennent des balles physiques situées sur un terrain de jeu physique, où les éléments de jeu (120) sont à distance des deux utilisateurs (100) de sorte que les utilisateurs (100), dans la réalisation d'une action physique, ne sont pas capables d'appliquer directement une action de force aux éléments de jeu (120) ;
un ou plusieurs manipulateurs de jeu (130) configurés pour détecter une action physique réalisée par un utilisateur (100), via un capteur, afin d'exercer une action de force sur au moins un élément de jeu (120), et de calculer un ou plusieurs paramètres physiques caractérisant l'action physique ;
un module permettant de réaliser des actions de force (150) configuré pour :
déterminer l'élément de jeu (120) à soumettre à l'action physique détectée sur la base des paramètres déterminés d'au moins un élément de jeu (120) et des paramètres physiques calculés,
calculer les paramètres de cette action de force sur l'élément de jeu (120) déterminé,
réaliser une action de force sur la balle physique représentée par l'élément de jeu (120) déterminé conformément aux paramètres calculés de l'action de force via au moins un élément parmi : la frappe mécanique de la balle physique (120) et le transfert d'une
impulsion électromagnétique à la balle physique (120) ;
un module de commande (160) configuré pour déterminer un ou plusieurs paramètres de comportement des éléments de jeu (120), par le suivi du déplacement des balles physiques par un ou plusieurs capteurs, dans lequel les paramètres de comportement caractérisent un changement d'état des éléments de jeu (120) ;
un module de visualisation (170) configuré pour
générer un modèle de comportement des éléments de jeu (120) sur la base des paramètres déterminés des éléments de jeu (120) et des paramètres de comportement déterminés des éléments de jeu (120) ; et
visualiser, à l'aide du modèle de comportement généré, les résultats du jeu sur les écrans respectifs employés par les utilisateurs, au moins au nombre de deux.

8. Système selon la revendication 7, dans lequel les utilisateurs (100), au moins au nombre de deux, emploient chacun l'un des manipulateurs de jeu (130) pour réaliser l'action de force sur au moins un élément de jeu (120).

9. Système selon l'une quelconque des revendications 7 et 8, dans lequel les paramètres de comportement des éléments de jeu (120) caractérisent le changement d'état du manipulateur de jeu (130).

10. Système selon l'une quelconque des revendications 7 à 9, dans lequel le module de commande (160) comporte au moins un élément parmi une caméra vidéo, un capteur de mouvement, un télémètre, et un imageur thermique pour suivre le comportement des éléments de jeu (120).

11. Système selon l'une quelconque des revendications 7 à 10, dans lequel le module de commande (160) est configuré pour mettre en œuvre une rétroaction provenant du manipulateur de jeu (130), comportant un changement d'état du manipulateur de jeu (130) sur la base des paramètres de comportement des éléments de jeu (120) auxquels l'action de force a été appliquée.

12. Système selon l'une quelconque des revendications 7 à 11, dans lequel la force exercée sur l'élément de jeu (120) est **caractérisée par** au moins un élément parmi une force physique agissant sur l'élément de jeu (120) ; un moment transmis à l'élément de jeu (120) ; et une énergie transmise à l'élément de jeu (120).

13. Système selon l'une quelconque des revendications 7 à 12, dans lequel le modèle de comportement des éléments de jeu (120) comporte au moins un élément parmi : un ensemble de modèles tridimensionnels (3D) virtuels des éléments de jeu (120), où chaque dit modèle 3D est coordonné avec un moment pendant lequel ledit modèle 3D était le modèle en cours ; et un flux vidéo enregistré d'un élément de jeu (120) comprenant un terrain de jeu.
